# EUROPÄISCHE PATENTANMELDUNG

(11) **EP 3 205 546 A1**
(43) Veröffentlichungstag der Anmeldung: **16.08.2017**
(21) Anmeldenummer: 17154906.6
(22) Anmeldetag: 07.02.2017
(51) Int. Cl.: B61D 17/20, B60D 5/00

(54) **ÜBERGANG ZUR ANORDNUNG ZWISCHEN ZWEI GELENKIG MITEINANDER VERBUNDENEN FAHRZEUGEN**

(30) Priorität: 09.02.2016 AT 262016 U
(71) Anmelder: ULTIMATE Europe Transportation Equipment GmbH, 3300 Amstetten (AT); Teufl, Manfred, 3332 Rosenau (AT)
(72) Erfinder: Teufl, Manfred, 3332 Rosenau (AT)
(74) Vertreter: KLIMENT & HENHAPEL

(57) **Zusammenfassung**

Übergang (26) zur Anordnung zwischen zwei gelenkig miteinander verbundenen Fahrzeugen, vorzugsweise Schienenfahrzeugen, wobei der Übergang (26) eine Vorrichtung (1) zur Eindämmung eines Brands in einem Fahrgastbereich des Fahrzeugs umfasst. Erfindungsgemäß ist vorgesehen, dass die Vorrichtung (1) mindestens ein Verschlusselement (2a, 2b) umfasst, welches von einer ersten Position (3) in eine zweite Position (4) und umgekehrt überführbar ist, wobei das mindestens eine Verschlusselement (2a, 2b) in der ersten Position (3) eine Durchgangsöffnung (5) der Vorrichtung (1) vollständig ausfüllt und in der zweiten Position (4) die Durchgangsöffnung (5) zumindest abschnittsweise freigibt, um Personen einen Durchgang zu ermöglichen, dass das mindestens eine Verschlusselement (2a, 2b) flexibel ist und dass in der ersten Position (3) ein Verlauf (6) des mindestens einen Verschlusselements (2a, 2b) in einer horizontalen Schnittebene (7) eine andere Krümmung aufweist als in der zweiten Position (4) .

## Beschreibung

### GEBIET DER ERFINDUNG

Die vorliegende Erfindung betrifft einen Übergang zur Anordnung zwischen zwei gelenkig miteinander verbundenen Fahrzeugen, vorzugsweise Schienenfahrzeugen, wobei der Übergang eine Vorrichtung zur Eindämmung eines Brands in einem Fahrgastbereich des Fahrzeugs umfasst.

### STAND DER TECHNIK

Brandschutz in Fahrzeugen, insbesondere Schienenfahrzeugen, ist ein wichtiges Thema, das immer strengeren gesetzlichen Regulierungen unterworfen ist. In diesem Zusammenhang ist beispielsweise die Verordnung (EU) 1302/2014 zu nennen, die technische Spezifikationen für die Interoperabilität (TSI) des Teilsystems "*Fahrzeuge - Lokomotiven und Personenwagen*" des Eisenbahnsystems in der Europäischen Union vorschreibt. In Abhängigkeit einer Kategorie von Personenwagen werden hierin u.a. Anforderungen an Systeme zur Eindämmung von Bränden in Personenwagen normiert. Eine dieser Anforderungen sieht "*Trennwände über den gesamten Querschnitt innerhalb der Fahrgast-*/*Personalbereiche des jeweiligen Fahrzeugs*" vor, wobei der Abstand der Trennwände "*höchstens 30 m*" betragen darf.

Zur Erfüllung dieser Anforderungen ist es aus dem Stand der Technik bekannt, Brandschutztüren in jedem Fahrzeug vorzusehen. Dies stellt jedoch einen erheblichen Mehraufwand dar, da der Platzbedarf bekannter Brandschutztüren beträchtlich ist, sodass mitunter sogar Sitzplätze reduziert werden müssen, um Platz für die Brandschutztüren zu schaffen. Weiters ist die Installation bekannter Brandschutztüren mit einem hohen Montageaufwand verbunden.

### AUFGABE DER ERFINDUNG

Es ist daher Aufgabe der vorliegenden Erfindung, Mittel zur Eindämmung eines Brands in einem Fahrgastbereich eines Fahrzeugs zur Verfügung zu stellen, welche die oben genannten Nachteile vermeiden. Insbesondere soll die vorliegende Erfindung gegenüber herkömmlichen Brandschutztüren eine wesentliche Reduktion des Platzbedarfs im Fahrzeug bewirken.

### DARSTELLUNG DER ERFINDUNG

Kern der vorliegenden Erfindung ist es, Platz im Fahrzeug, insbesondere im Fahrgastbereich, zu sparen, indem eine Vorrichtung zur Brandeindämmung in einem Übergang angeordnet wird, der zur Anordnung zwischen zwei gelenkig miteinander verbundenen Fahrzeugen vorgesehen ist. Konkret ist es bei einem Übergang zur Anordnung zwischen zwei gelenkig miteinander verbundenen Fahrzeugen, vorzugsweise Schienenfahrzeugen, erfindungsgemäß vorgesehen, dass der Übergang eine Vorrichtung zur Eindämmung eines Brands in einem Fahrgastbereich des Fahrzeugs umfasst. Auf diese Weise kann Platz im Fahrzeug selbst eingespart werden bzw. kann dieser Platz z.B. bei Personenwagen für Sitzreihen verwendet werden. Da einzelne Schienenfahrzeuge, insbesondere Personenwagen bzw. -waggons, üblicherweise eine geringere Länge als 30 m aufweisen und Züge üblicherweise aus mehreren solcher Schienenfahrzeuge bestehen, die gelenkig miteinander verbunden sind, werden durch die erfindungsgemäße Installation der Vorrichtung zur Eindämmung eines Brands in den Übergangen zwischen den einzelnen (Schienen-)Fahrzeugen gleichzeitig die Vorgaben der Verordnung (EU) 1302/2014 erfüllt. Dabei ist unter einer Vorrichtung zur Eindämmung eines Brands eine Vorrichtung zu verstehen, die die in der Verordnung (EU) 1302/2014 geforderte Funktionalität aufweist. Eine solche Vorrichtung kann auch als Brandschott bezeichnet werden.

Unter "Fahrgastbereich" ist im Sinne der bereits zitierten Verordnung (EU) 1302/2014 neben jenem Fahrzeugbereich, der primär für Fahrgäste bestimmt ist, natürlich auch jener Bereich des Fahrzeugs zu verstehen, in dem sich Personal aufhalten kann.

Übergänge an sich sind aus dem Stand der Technik bekannt. Diese weisen üblicherweise zur Befestigung an Wagenkästen an Enden der gelenkig miteinander verbundenen Fahrzeuge Endrahmen auf. Typischerweise werden die Endrahmen mit dem jeweiligen Wagenkasten verschraubt. Darüberhinaus können die Übergänge mindestens einen Mittelrahmen aufweisen, der zwischen den Endrahmen angeordnet ist. Um das Brandschott auf einfache Art und Weise im bzw. am Übergang montieren zu können, ist es bei einer bevorzugten Ausführungsform des erfindungsgemäßen Übergangs vorgesehen, dass die Vorrichtung an einem Endrahmen oder an einem Mittelrahmen des Übergangs angeordnet ist.

Um sicherzustellen, dass die Vorrichtung möglichst platzsparend im Übergang untergebracht werden kann, ist es bei einer bevorzugten Ausführungsform des erfindungsgemäßen Übergangs vorgesehen, dass die Vorrichtung mindestens ein Verschlusselement umfasst, welches von einer ersten Position in eine zweite Position und umgekehrt überführbar ist, wobei das mindestens eine Verschlusselement in der ersten Position eine Durchgangsöffnung der Vorrichtung vollständig ausfüllt und in der zweiten Position die Durchgangsöffnung zumindest abschnittsweise freigibt, um Personen einen Durchgang zu ermöglichen, dass das mindestens eine Verschlusselement flexibel ist und dass in der ersten Position ein Verlauf des mindestens einen Verschlusselements in einer horizontalen Schnittebene eine andere Krümmung aufweist als in der zweiten Position. Mit anderen Worten verläuft das mindestens eine Verschlusselement in der Schnittebene entlang mindestens einer Linie, wobei diese Linie in der ersten Position eine andere Krümmung aufweist als in der zweiten Position.

Die Flexibilität des mindestens einen Verschlusselements ist dabei so zu verstehen, dass hierdurch unterschiedliche Krümmungen des Verlaufs ermöglicht werden. Indem das mindestens eine Verschlusselement durch seine flexible Auslegung in der ersten und zweiten Position unterschiedlich gekrümmt ist, kann eine besonders platzsparende Anordnung in der zweiten Position erzielt werden. Insbesondere kann der Verlauf des mindestens einen Verschlusselements in der zweiten Position gegenüber der ersten Position eine Umlenkung gegenüber einer Öffnungsrichtung darstellen, wobei die Öffnungsrichtung dann automatisch eindeutig definiert ist, wenn der Verlauf in der ersten Position geradlinig ist, da die Öffnungsrichtung dann parallel zur Geraden ist, welcher der Verlauf folgt. Entsprechend problemlos gestaltet sich der Einbau einer erfindungsgemäßen Vorrichtung im erfindungsgemäßen Übergang.

Solange das mindestens eine Verschlusselement sich in der zweiten Position befindet, können Personen ungehindert die Durchgangsöffnung und somit den Übergang passieren. Bei einem auftretenden Brand in einem Fahrzeug kann sodann durch Überführen des mindestens einen Verschlusselements von der zweiten Position in die erste Position der Brand eingedämmt werden, indem das mindestens eine Verschlusselement die Durchgangsöffnung und damit den Übergang vollständig verschließt und eine Barriere für den Brand bildet.

Es versteht sich, dass die Vorrichtung hierfür so dimensionierbar ist, dass die Durchgangsöffnung im Wesentlichen einem Querschnitt des Übergangs - und ggf. des Fahrgastbereichs - entspricht. D.h. dieser Querschnitt kann mittels der erfindungsgemäßen Vorrichtung im Bedarfsfall zuverlässig verschlossen werden.

Vorzugsweise findet die gesamte Bewegung des mindestens einen Verschlusselements horizontal statt. D.h. beim Überführen zwischen der ersten und der zweiten Position und umgekehrt ändern sich im Wesentlichen nur die horizontalen Koordinaten eines jeden Punkts des Verschlusselements. Typischerweise ist daher das mindestens eine Verschlusselement in seiner zweiten Position zumindest abschnittsweise an mindestens einer Seite ("links und/oder rechts") der Durchgangsöffnung bzw. des Übergangs, in welchem die erfindungsgemäße Vorrichtung installiert ist, angeordnet. In der ersten Position steht das mindestens eine Verschlusselement dann von dieser Seite ab.

Durch die flexible Auslegung des mindestens einen Verschlusselements kann dieses beim Übergang von der geschlossenen, ersten Position zur offenen, zweiten Position aber nicht nur umgelenkt werden, sondern es kann das mindestens eine Verschlusselement regelrecht aufgewickelt bzw. aufgerollt werden, was eine extreme Platzersparnis darstellt. Daher ist es bei einer bevorzugten Ausführungsform des erfindungsgemäßen Übergangs vorgesehen, dass in der Schnittebene der Verlauf in der ersten Position zumindest im Bereich der Durchgangsöffnung geradlinig ist und in der zweiten Position zumindest in einem Bereich außerhalb der Durchgangsöffnung gekrümmt, vorzugsweise spiralförmig. Der geradlinige Verlauf in der ersten Position stellt die einfachste und materialsparendste Möglichkeit dar, die Durchgangsöffnung bzw. den Übergang vollständig zu verschließen. In diesem Fall liegt die Durchgangsöffnung in einer Ebene Vorzugsweise steht dabei die Schnittebene normal auf die Ebene der Durchgangsöffnung, wobei aber grundsätzlich auch ein Winkel ungleich 90° zwischen der Schnittebene und der Ebene der Durchgangsöffnung möglich ist, wenn die Ebene der Durchgangsöffnung gegenüber einer vertikalen Ebene geneigt angeordnet ist.

Es sei bemerkt, dass selbstverständlich auch Varianten denkbar sind, bei denen in der Schnittebene der Verlauf in der ersten Position gekrümmt, z.B. abschnittsweise kreisförmig, insbesondere viertelkreisförmig, ist.

Je nachdem wie lang der Verlauf jenes Abschnitts des mindestens einen Verschlusselements, der die Durchgangsöffnung in der ersten Position vollständig ausfüllt, in der Schnittebene ist, kann eine hinreichende Freigabe der Durchgangsöffnung in der zweiten Position dadurch realisiert werden, dass der Verlauf in der zweiten Position lediglich einen gewissen Winkelbereich um eine Achse abdeckt. D.h. es ist nicht zwingend erforderlich, dass das mindestens eine Verschlusselement in der zweiten Position in mehreren Lagen aufgewickelt ist. Entsprechend ist es bei einer bevorzugten Ausführungsform des erfindungsgemäßen Übergangs vorgesehen, dass in der Schnittebene der Verlauf in der zweiten Position eine normal auf die Schnittebene stehende Achse über einen Winkelbereich von mindestens 180°, vorzugsweise mindestens 270°, umgibt. Insbesondere kann der Verlauf dabei zumindest abschnittsweise spiralförmig um die Achse bzw. um einen Schnittpunkt der Achse mit der Schnittebene angeordnet sein oder zumindest abschnittsweise kreisbogenförmig.

Um ein zuverlässiges und rasches Schließen der Durchgangsöffnung bzw. des Übergangs im Bedarfsfall sicherstellen zu können, ist es bei einer bevorzugten Ausführungsform des erfindungsgemäßen Übergangs vorgesehen, dass die Vorrichtung Schließmittel umfasst, die permanent eine Kraft auf das mindestens eine Verschlusselement ausüben, um dieses in die erste Position überzuführen und/oder in der ersten Position zu halten. Vorzugsweise sind die Schließmittel dabei so ausgelegt, dass die Kraft mittels Handkraft überwunden werden kann, sodass eine Person das mindestens eine Verschlusselement manuell, gegen die von den Schließmitteln aufgebrachte Kraft, von der ersten Position in die zweite Position überführen kann.

Insbesondere mechanische Schließmittel stellen eine kostengünstige Lösung dar, um ein zuverlässiges Schließen sicherzustellen, auch in Fällen bei denen beispielsweise eine elektrische Energieversorgung unterbrochen ist. Daher ist es bei einer bevorzugten Ausführungsform des erfindungsgemäßen Übergangs vorgesehen, dass die Schließmittel mindestens eine Feder und/oder mindestens ein Gegengewicht umfassen.

Um Personen das problemlose Passieren der Durchgangsöffnung bzw. des Übergangs im Normalfall, wo keine Gefahr, insbesondere kein Brand, gegeben ist, zu ermöglichen, ist es bei einer besonders bevorzugten Ausführungsform des erfindungsgemäßen Übergangs vorgesehen, dass Haltemittel vorgesehen sind, um das mindestens eine Verschlusselement solange in der zweiten Position zu halten, bis die Überführung in die erste Position initiiert wird. Die Initiierung kann dabei durch eine Brandmeldung erfolgen, wobei die Brandmeldung wiederum in Form eines Signals oder eines Wegfalls eines Sicherheitssignals stattfinden kann. Ebenso kann ein Ausfall der Energieversorgung die Schließung der Durchgangsöffnung initiieren. Darüberhinaus kann die Initiierung natürlich auch aus anderen Gründen durchgeführt werden, insbesondere wenn die Durchgangsöffnung bewusst verschlossen werden soll.

Letzteres kann insbesondere der Fall sein, wenn der Übergang das Fahrzeug abschließt - der Übergang ist also in diesem Fall nicht zwischen zwei Fahrzeugen angeordnet, sondern am Ende eines Fahrzeugs - und das Fahrzeug außer Betrieb gestellt wird. Das Verschließen der Durchgangsöffnung kann in diesem Fall dazu dienen, einen unbefugten Zugang in das Innere des Fahrzeugs von außen zu unterbinden, sofern die Vorrichtung bzw. das Brandschott ein zusätzliches, dafür vorgesehenes und separat zu betätigendes Schloss aufweist, um das mindestens eine Verschlusselement in der ersten Position versperren zu können.

Ist kein solches Schloss vorgesehen, so kann die geschlossene Durchgangsöffnung jederzeit von einer Person durch einfaches Aufschieben geöffnet werden. D.h. die Person kann das mindestens eine Verschlusselement von der ersten Position in die zweite Position überführen. Im Brandfall kann die Person somit das Brandschott öffnen, wobei das mindestens eine Verschlusselement allerdings nicht in der zweiten Position, also im geöffneten Zustand, arretiert, sondern hinter der Person sofort wieder durch die Schließmittel geschlossen wird. Dies ist notwendig um zu verhindern, dass im Brandfall Menschen eingeschlossen werden.

Um ein rasches Auslösen der Haltemittel sicherzustellen, sind insbesondere elektrisch oder elektronisch aktivierte Haltemittel geeignet. Daher ist es bei einer besonders bevorzugten Ausführungsform des erfindungsgemäßen Übergangs vorgesehen, dass die Haltemittel mindestens einen Magnet, vorzugsweise Elektromagnet, umfassen. Bei Einsatz eines Permanentmagneten kann dieser z.B. elektrisch aktiviert von einer Halteposition, in der der Permanentmagnet aufgrund seiner Magnetkraft das mindestens eine Verschlusselement in der zweiten Position hält, in eine Freigabeposition, in der der Permanentmagnet das mindestens eine Verschlusselement nicht mehr hält, gebracht werden. Beim Elektromagneten kann dessen Magnetkraft durch Unterbrechung oder Verringerung einer elektrischen Energieversorgung unterbrochen oder hinreichend verringert werden, damit der Elektromagnet das mindestens eine Verschlusselement nicht mehr mittels seiner Magnetkraft in der zweiten Position halten kann.

Um das mindestens eine Verschlusselement in der zweiten Position zu halten, kann der Magnet mit einem Freigabeelement der Haltemittel, beispielsweise einem Freigabehebel oder einem Freigabestössel, zusammenarbeiten, wobei das Freigabeelement je nach dessen Position das mindestens eine Verschlusselement in der zweiten Position blockieren oder die Überführung in die erste Position freigeben kann. Mittels des Magneten kann das Freigabeelement entsprechend zwischen diesen Positionen bewegt werden.

Um den Verlauf des mindestens einen Verschlusselements in der ersten und zweiten Position genau zu definieren und gleichzeitig ein problemloses Überführen zwischen den beiden Position zu erleichtern, ist es bei einer bevorzugten Ausführungsform des erfindungsgemäßen Übergangs vorgesehen, dass das mindestens eine Verschlusselement auf einander gegenüberliegenden Seiten mittels Führungen geführt ist, wobei die Führungen den Verlauf des mindestens einen Verschlusselements in der Schnittebene vorgeben. Die Führungen auf einander gegenüberliegenden Seiten, typischerweise oberhalb und unterhalb des mindestens einen Verschlusselements, garantieren dabei eine mechanisch besonders stabile Anordnung des mindestens einen Verschlusselements sowohl in der ersten und zweiten Position als auch bei der Überführung zwischen diesen Positionen.

Um den durch Reibung verursachten Kraftaufwand für das Überführen zwischen den beiden Positionen möglichst gering zu halten, ist es bei einer besonders bevorzugten Ausführungsform des erfindungsgemäßen Übergangs vorgesehen, dass das mindestens eine Verschlusselement in den Führungen mittels Rollen und/oder Gleitelementen geführt ist. Beispielsweise können zur Führung des mindestens einen Verschlusselements in einer oberen Führung Rollen, insbesondere Tragrollen vorgesehen sein, die den Großteil der Gewichtslast des mindestens einen Verschlusselements aufnehmen. Entsprechend können insbesondere Abschnitte des Verschlusselements, die in einer unteren Führung geführt sind, so ausgelegt sein, dass sie optimale Gleiteigenschaften in der unteren Führung aufweisen. Beispielsweise können diese Abschnitte aus einem geeigneten Material - wie z.B. Polytetrafluorethylen, Polyamid oder hochmolekulares Polyethylen oder ähnliche Kunststoffe mit guten Gleiteigenschaften - gefertigt sein oder eine Beschichtung aus einem solchen Material aufweisen. Die Führungen können aus Metall, insbesondere aus einer Aluminiumlegierung oder einer Stahllegierung, hergestellt sein.

Um die im Bereich der Führungen angeordneten Elemente der erfindungsgemäßen Vorrichtung zu schützen und einen Brandüberschlag im Bereich der Führungen zu verhindern, ist es bei einer besonders bevorzugten Ausführungsform des erfindungsgemäßen Übergangs vorgesehen, dass in mindestens einer der Führungen auf einer dem mindestens einen Verschlusselement zugewandten Innenfläche ein intumeszierendes Material, vorzugsweise ein intumeszierendes Brandschutzlaminat, angeordnet ist. Geeignete intumeszierende Materialien bzw. Brandschutzlaminate sind aus dem Stand der Technik bekannt und kommerziell erhältlich. Diese vergrößern bei Hitzeeinwirkung, insbesondere bei Temperaturen, die größer als eine Auslösetemperatur von z.B. 150°C sind, ihr Volumen und bilden so eine hitzeisolierende Schicht, beispielsweise aus einem mikroporösen Schaum. Darüberhinaus kann diese Schicht auch als eine Rauchgassperre fungieren.

Auf diese Weise können im Brandfall insbesondere Dichtungen geschützt werden, die u.a. zur Abdichtung gegen Rauchgase dienen, wenn sich das mindestens eine Verschlusselement in der ersten Position befindet. Solange die Brandschutzlaminate noch keine hitzeisolierende Schicht als Rauchgassperre gebildet haben, übernehmen die Dichtungen die alleinige Dichtfunktion gegen Rauchgase. Dies ist bei der Anordnung der Dichtungen zu berücksichtigen. Weiters müssen die Dichtungen vorzugsweise zumindest bis zum Erreichen der Auslösetemperatur stabil bleiben. Solche Dichtungen bzw. für solche Dichtungen geeignete Materialien sind grundsätzlich aus dem Stand der Technik bekannt, wobei vorzugsweise Silikon bzw. auf Silikon basierende Materialien verwendet werden. Daher ist es bei einer besonders bevorzugten Ausführungsform des erfindungsgemäßen Übergangs vorgesehen, dass in einer von der Durchgangsöffnung weg weisenden Richtung gesehen hinter dem intumeszierenden Material eine Dichtung im Bereich der Innenfläche angeordnet ist. D.h. die Dichtungen können insbesondere auch an den Innenflächen der Führungen angeordnet sein und einen Bereich zwischen dem mindestens einen Verschlusselement und der jeweiligen Führung abdichten.

Analog ist es bei einer bevorzugten Ausführungsform des erfindungsgemäßen Übergangs vorgesehen, dass in einem Bereich eines Rands der Durchgangsöffnung Hilfsrahmenelemente vorgesehen sind, deren Längsachse normal auf die Schnittebene steht und die das mindestens eine Verschlusselement von zwei gegenüberliegenden Seiten zwischen sich aufnehmen, wobei auf einer Innenfläche der Hilfsrahmenelemente ein intumeszierendes Material, vorzugsweise ein intumeszierendes Brandschutzlaminat, angeordnet ist. Dabei begrenzen die Hilfsrahmenelemente die Durchgangsöffnung zumindest abschnittsweise.

Wiederum können auf diese Weise im Brandfall insbesondere Dichtungen geschützt werden, die u.a. zur Abdichtung gegen Rauchgase dienen. Bzw. sind solche Dichtungen zur Abdichtung gegen Rauchgase notwendig, solange das intumeszierende Material noch nicht expandiert ist und somit noch keine Rauchgassperre ausgebildet hat. Daher ist es bei einer besonders bevorzugten Ausführungsform des erfindungsgemäßen Übergangs vorgesehen, dass in einer von der Durchgangsöffnung weg weisenden Richtung gesehen hinter dem intumeszierenden Material eine Dichtung im Bereich der Innenfläche der Hilfsrahmenelemente angeordnet ist. D.h. die Dichtungen können auch an den Innenflächen der Hilfsrahmenelemente angeordnet sein und einen Bereich zwischen dem mindestens einen Verschlusselement und den Hilfsrahmenelementen abdichten, insbesondere wenn sich das mindestens eine Verschlusselement in der ersten Position befindet.

Um entlang einer normal auf die Schnittebene stehenden Richtung eine möglichst gleichmäßige Verteilung von Krafteinwirkungen, insbesondere durch die Schließmittel, zu bewirken, ist es bei einer bevorzugten Ausführungsform des erfindungsgemäßen Übergangs vorgesehen, dass mindestens eine um eine normal auf die Schnittebene stehende Drehachse drehbare Synchronisationswelle vorgesehen ist, die außerhalb der Durchgangsöffnung angeordnet und mit einem Ende des mindestens einen Verschlusselements verbunden ist, wobei durch Drehung der mindestens einen Synchronisationswelle das mindestens eine Verschlusselement zwischen der ersten Position und der zweiten Position hin und her überführbar ist. Insbesondere kann hierdurch eine Aufteilung der Krafteinwirkungen auf das mindestens eine Verschlusselement zwischen der oberen und unteren Führung erfolgen, um einem Verkanten in den Führungen entgegen zu wirken.

Die Drehachse kann dabei als jene Achse fungieren, um welche in der Schnittebene der Verlauf in der zweiten Position angeordnet ist und einen gewissen Winkelbereich abdeckt.

Einerseits soll eine möglichst direkte Kraftübertragung von der Synchronisationswelle auf das mindestens eine Verschlusselement gewährleistet werden, um durch Hin- und Herdrehen der Synchronisationswelle das Überführen des mindestens einen Verschlusselements von der zweiten Position zur ersten Position und retour zu bewirken. Dies könnte beispielsweise durch eine Verbindung der mindestens einen Synchronisationswelle mit dem mindestens einen Verschlusselement über Kettenglieder erfolgen.

Andererseits soll eine ruckartige Beaufschlagung des mindestens einen Verschlusselements mit der von der Synchronisationswelle übertragenen Kraft vermieden werden, um einem Verkanten weiter entgegen zu wirken. Daher ist es bei einer besonders bevorzugten Ausführungsform des erfindungsgemäßen Übergangs vorgesehen, dass zur Verbindung der mindestens einen Synchronisationswelle mit dem mindestens einen Verschlusselement Federstahlklammern vorgesehen sind. Durch elastische Verformung der Federstahlklammern wird ein ruckartiges Angreifen der Kraft am mindestens einen Verschlusselement vermieden oder zumindest gedämpft, wenn die Synchronisationswelle ruckartig in Drehung versetzt wird.

Um ein effizientes Überführen des mindestens einen Verschlusselements von der zweiten Position in die erste Position durch die Schließmittel gewährleisten zu können, ist es bei einer besonders bevorzugten Ausführungsform des erfindungsgemäßen Übergangs vorgesehen, dass die Schließmittel mit der mindestens einen Synchronisationswelle wirkverbunden sind. Die Wirkverbindung kann dabei auf an sich bekannte Arten erfolgen, z.B. über Zahnräder und Zahnriemen, über Zahnräder alleine oder über Zahnkränze und Ketten. Wiederum wird über die Synchronisationswelle die durch die Schließmittel aufgebrachte Kraft, die letztlich auf das mindestens eine Verschlusselement wirkt, möglichst gleichmäßig entlang der auf die Schnittebene normal stehenden Richtung verteilt.

Um die Flexibilität des mindestens einen Verschlusselements sicherzustellen, kann dieses z.B. aus einem feuerfesten und mechanisch relativ steifen Gewebe oder einer entsprechenden Folie bestehen. Solche Gewebe bzw. Folien sind aus dem Stand der Technik bekannt und weisen zur Erzielung der gewünschten Feuerfestigkeit z.B. ein Silikonmaterial bzw. ein auf Silikon basierendes Material auf. Dabei ist das mindestens eine Verschlusselement typischerweise so ausgelegt, dass mindestens 15 min Brandwiderstand gegeben ist.

Um gegenüber solchen Geweben insbesondere eine höhere mechanische Festigkeit zu erzielen, ist es bei einer bevorzugten Ausführungsform des erfindungsgemäßen Übergangs vorgesehen, dass das mindestens eine Verschlusselement aus gelenkig miteinander verbundenen Lamellen aufgebaut ist. Die Lamellen können dabei grundsätzlich aus mechanisch festen Materialien aufgebaut und dementsprechend unflexibel sein. Die für die erfindungsgemäße Vorrichtung notwendige Flexibilität des mindestens einen Verschlusselements wird durch die gelenkige Verbindung der Lamellen realisiert.

Insbesondere können Scharniergelenke als Verbindung vorgesehen sein. Dabei können die Scharniergelenke in an sich bekannter Weise aufgebaut sein. Beispielsweise können die Lamellen geometrisch derart gestaltet sein, dass sie jeweils auf einer Seite eine zangenförmige Gelenkspfanne ausbilden und auf einer gegenüberliegenden Seite einen walzenförmigen Gelenkskopf. Die Lamellen sind dann so miteinander verbunden, dass der Gelenkskopf einer Lamelle in der Gelenkspfanne der anschließenden Lamelle aufgenommen ist.

Die Lamellen können zur Sicherung ihrer mechanischen Stabilität und gleichzeitiger Senkung ihrer Masse aus einer festen Hülle, z.B. aus einem geeigneten harten Kunststoff oder einer Aluminiumlegierung, bestehen, die mit einem leichteren Material, z.B. einem Schaum, beispielsweise einem PolyurethanSchaum, gefüllt ist. Um die Brandschutzfunktion der Lamellen weiter zu steigern, ist es bei einer bevorzugten Ausführungsform des erfindungsgemäßen Übergangs vorgesehen, dass die Lamellen mit einem intumeszierenden Material gefüllt sind. Bei Hitzeeinwirkung bildet das intumeszierende Material eine hitzeisolierende Schicht. D.h. das mindestens eine Verschlusselement bildet dann in der ersten Position eine effektive Hitzeisolierung der Durchgangsöffnung, was die Gefahr eines Brandüberschlags durch Hitzeeinwirkung durch die geschlossene Durchgangsöffnung hindurch weiter verringert.

Bei einer bevorzugten Ausführungsform des erfindungsgemäßen Übergangs ist vorgesehen, dass genau zwei Verschlusselemente vorgesehen sind. Dies ermöglicht die Unterbringung der beiden Verschlusselemente in deren zweiter Position auf gegenüberliegenden Seiten der Durchgangsöffnung bzw. des Übergangs, wobei der Platzbedarf auf jeder Seite deutlich geringer ausfällt als für den Fall, wo auf dieser Seite ein einzelnes Verschlusselement angeordnet werden muss, das alleine in der ersten Position die gesamte Durchgangsöffnung ausfüllt. Grundsätzlich sind aber natürlich auch Ausführungsvarianten mit genau einem Verschlusselement oder genau drei, vier etc. Verschlusselementen denkbar.

Um eine besonders platzsparende Anordnung zu realisieren, ist es bei einer besonders bevorzugten Ausführungsform des erfindungsgemäßen Übergangs vorgesehen, dass die zwei Verschlusselemente zur Überführung von der ersten Position in die zweite Position und umgekehrt zumindest abschnittsweise in entgegengesetzte Richtungen bewegbar sind.

Um eine besonders ökonomische Platznutzung zu erzielen, ist es bei einer bevorzugten Ausführungsform des erfindungsgemäßen Übergangs vorgesehen, dass durch die beiden Verschlusselemente in der ersten Position im Wesentlichen gleich große Flächen der Durchgangsöffnung ausgefüllt werden. Entsprechend ist der Platzbedarf für die Unterbringung der beiden Verschlusselemente in deren zweiter Position auf den Seiten dann im Wesentlichen gleich groß, was den Einbau der erfindungsgemäßen Vorrichtung im erfindungsgemäßen Übergang konstruktiv vereinfacht.

Um die Durchgangsöffnung in der ersten Position möglichst dicht und mechanisch stabil abzuschließen, ist es bei einer bevorzugten Ausführungsform des erfindungsgemäßen Übergangs vorgesehen, dass die beiden Verschlusselemente freie Enden aufweisen, die in der ersten Position miteinander in Eingriff stehen. Vorzugsweise sind die freien Enden zumindest in einer Zwischenposition, welche die beiden Verschlusselemente bei deren Überführung zwischen der ersten Position und der zweiten Position einnehmen, einander gegenüberliegend angeordnet.

Bei einer besonders bevorzugten Ausführungsform des erfindungsgemäßen Übergangs ist vorgesehen, dass eines der beiden freien Enden zumindest abschnittsweise eine Nut aufweist und das andere der beiden freien Enden zumindest abschnittsweise als Gegenstück zur Nut ausgebildet ist, wobei in der ersten Position die Nut und das Gegenstück in Eingriff stehen. Eine derartige Ausgestaltung der freien Enden ermöglicht, dass die freien Enden durch Überführung in die erste Position zuverlässig in Eingriff miteinander gebracht werden können.

Bei einer besonders bevorzugten Ausführungsform des erfindungsgemäßen Übergangs ist vorgesehen, dass auf einander gegenüberliegenden Innenflächen der Nut intumeszierendes Material, vorzugsweise intumeszierendes Brandschutzlaminat, angeordnet ist. Die freien Enden werden durch die vom intumeszierenden Material bei Hitzeeinwirkung gebildete Isolationsschicht besonders effektiv gegen zerstörerische Hitzeeinwirkung geschützt. Auf diese Weise können im Brandfall insbesondere auch Dichtungen geschützt werden, die zur Abdichtung gegen Rauchgase dienen und in der Nut angeordnet sind, wenn sich die Verschlusselemente in der ersten Position befinden. Bzw. sind solche Dichtungen zur Abdichtung gegen Rauchgase notwendig, solange das intumeszierende Material noch nicht expandiert ist und somit noch keine Rauchgassperre ausgebildet hat. Dabei können die Dichtungen sowohl am freien Ende des einen Verschlusselements angeordnet sein als auch am freien Ende des anderen Verschlusselements.

Analog zum oben Gesagten ist erfindungsgemäß auch eine Anordnung von mehreren Fahrzeugen, insbesondere Schienenfahrzeugen, vorgesehen, wobei zwischen jeweils zwei aufeinander folgenden Fahrzeugen ein erfindungsgemäßer Übergang vorgesehen ist

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine axonometrische Ansicht einer erfindungsgemäßen Vorrichtung für einen erfindungsgemäßen Übergang, wobei sich ein erstes und ein zweites Verschlusselement in einer ersten Position befinden
- Fig. 2: eine Frontansicht eines erfindungsgemäßen Übergangs mit der Vorrichtung aus Fig. 1
- Fig. 3: eine axonometrische Ansicht des Übergangs aus Fig. 2, wobei die Verschlusselemente sich in einer zweiten Position befinden
- Fig. 4: eine axonometrische Detailansicht eines Schnitts des Übergangs im Bereich einer oberen Führung, in der das erste Verschlusselement geführt ist, wobei aus Übersichtlichkeitsgründen ein äußerer Balg des Übergangs nicht dargestellt ist
- Fig. 5: eine Detailansicht eines Schnitts des Übergangs im Bereich der oberen Führung, in der das zweite Verschlusselement geführt ist, wobei aus Übersichtlichkeitsgründen der äußere Balg des Übergangs nicht dargestellt ist
- Fig. 6: eine axonometrische Detailansicht des ersten Verschlusselements der Vorrichtung aus Fig. 1 von schräg oben mit einem Schnitt durch die obere Führung
- Fig. 7a: eine Ansicht analog zu Fig. 6, jedoch in einer horizontalen Schnittebene mit Blickrichtung von unten nach oben
- Fig. 7b: eine Darstellung eines Verlaufs des ersten Verschlusselements in Fig. 7a
- Fig. 7c: eine Darstellung des Verlaufs des ersten Verschlusselements analog zu Fig. 7b, wobei sich das erste Verschlusselement in der zweiten Position befindet
- Fig. 8: eine axonometrische Detailansicht eines Schnitts der Vorrichtung im Bereich er unteren Führung von schräg oben, wobei sich das erste Verschlusselement in der ersten Position befindet
- Fig. 9: eine Detailansicht analog zu Fig. 6, wobei sich das erste Verschlusselement in der zweiten Position befindet
- Fig. 10: eine axonometrische Schnittansicht des Übergangs, wobei sich die Verschlusselemente in der ersten Position befinden und aus Übersichtlichkeitsgründen der äußere Balg des Übergangs nicht dargestellt ist
- Fig. 11: eine vergrößerte Darstellung des Details A aus Fig. 10

### WEGE ZUR AUSFÜHRUNG DER ERFINDUNG

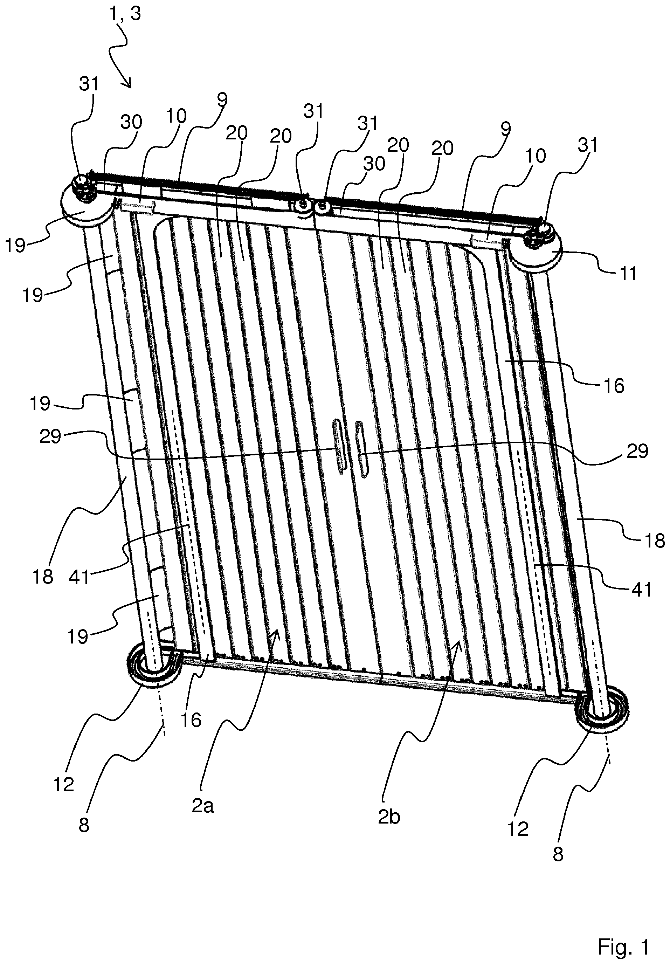

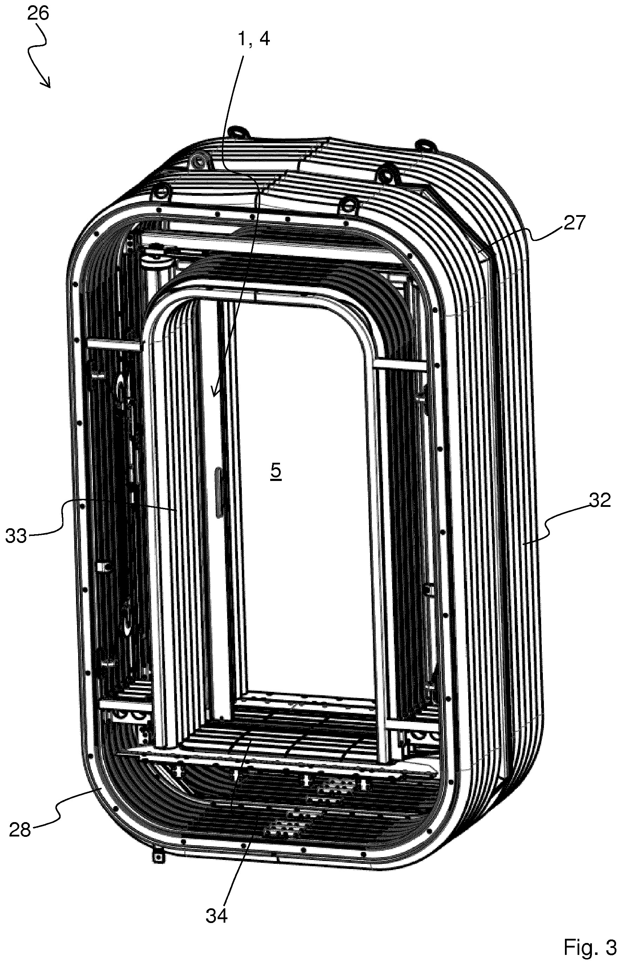

Fig. 1 zeigt eine erfindungsgemäße Vorrichtung 1 zur Eindämmung eines Brands in einem Fahrgastbereich eines Fahrzeugs, insbesondere Schienenfahrzeugs, welche Vorrichtung 1 zum Einsatz in einem erfindungsgemäßen Übergang 26 vorgesehen ist. Im dargestellten Ausführungsbeispiel weist die Vorrichtung 1 zwei Verschlusselemente 2a, 2b auf, die in Fig. 1 in einer ersten Position 3 dargestellt sind, in der sie eine Durchgangsöffnung 5 (vgl. Fig. 3) vollständig ausfüllen bzw. verschließen. Somit wird die Ausbreitung eines Brands durch die Durchgangsöffnung 5 verhindert.

Falls zumindest ein zusätzliches, separat zu betätigendes Schloss (nicht dargestellt) vorgesehen ist, können die Verschlusselemente 2a, 2b außerdem in der ersten Position 3 versperrt werden, um einen Durchgang durch die Durchgangsöffnung 5 für Personen unmöglich zu machen.

Die Verschlusselemente 2a, 2b sind im dargestellten Ausführungsbeispiel aus Lamellen 20 aufgebaut, die gelenkig miteinander verbunden sind, wodurch sich eine Flexibilität der Verschlusselemente 2a, 2b ergibt. Diese Flexibilität erlaubt es, dass die Verschlusselemente 2a, 2b zur Freigabe der Durchgangsöffnung 5 nicht wie bekannte starre Türflügel zur Seite geschoben oder verschwenkt werden müssen, sondern seitlich der Durchgangsöffnung 5 gekrümmt angeordnet werden können, wodurch eine beträchtliche Platzersparnis gegenüber bekannten Lösungen erzielt wird, was wiederum die Unterbringung in einem erfindungsgemäßen Übergang 26 erlaubt. Die Verschlusselemente 2a, 2b befinden sich dabei in einer zweiten Position 4, in der die Durchgangsöffnung 5 freigegeben ist.

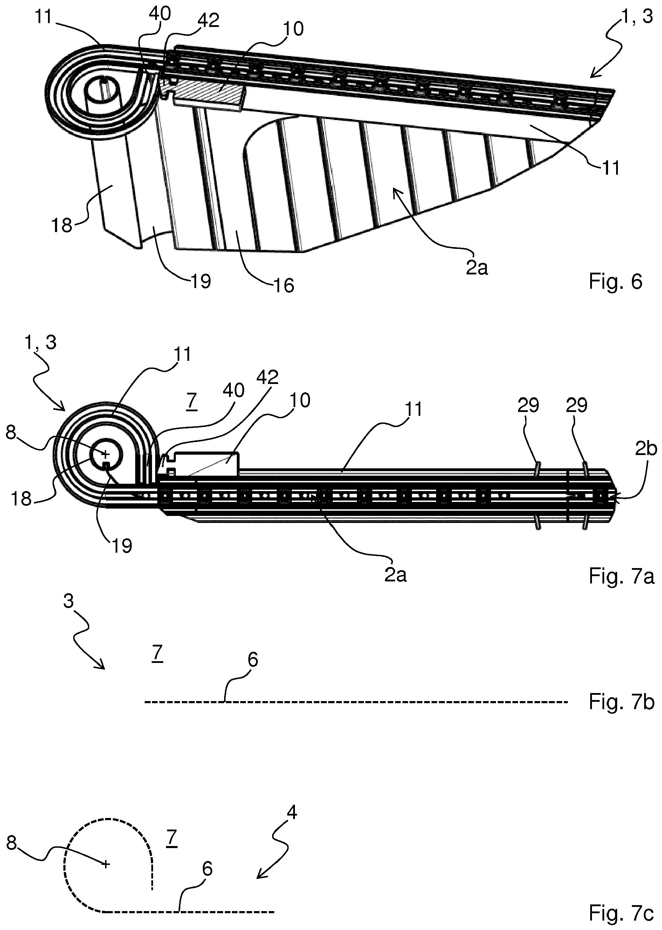

Die genannten Anordnungen der Verschlusselemente 2a, 2b in der ersten Position 3 und zweiten Position 4 entsprechen unterschiedlichen Verläufen 6 in einer horizontalen Schnittebene 7, welche Verläufe 6 in Fig. 7b und Fig. 7c durch strichlierte Linien dargestellt sind, wobei in diesen Figuren die Schnittebene 7 in der Zeichenebene liegt. Wie bereits aus Fig. 1 hervorgeht, verlaufen die Verschlusselemente 2a, 2b in der ersten Position 3 in der Schnittebene 7 jeweils entlang einer geraden Linie (vgl. Fig. 7b), d.h. der Verlauf 6 weist Krümmung null auf. In der zweiten Position 4 hingegen ist der Verlauf 6 abschnittsweise in einem Bereich außerhalb der Durchgangsöffnung 5 gekrümmt, vgl. Fig. 7c. Dabei umgibt der Verlauf eine Drehachse 8 einer Synchronisationswelle 18 über einen Winkelbereich von etwas mehr als 270°. D.h. die Verschlusselemente 2a, 2b sind in der zweiten Position 4 rund um die Drehachsen 8 bzw. die Synchronisationswellen 18 angeordnet bzw. teilweise aufgerollt oder aufgewickelt.

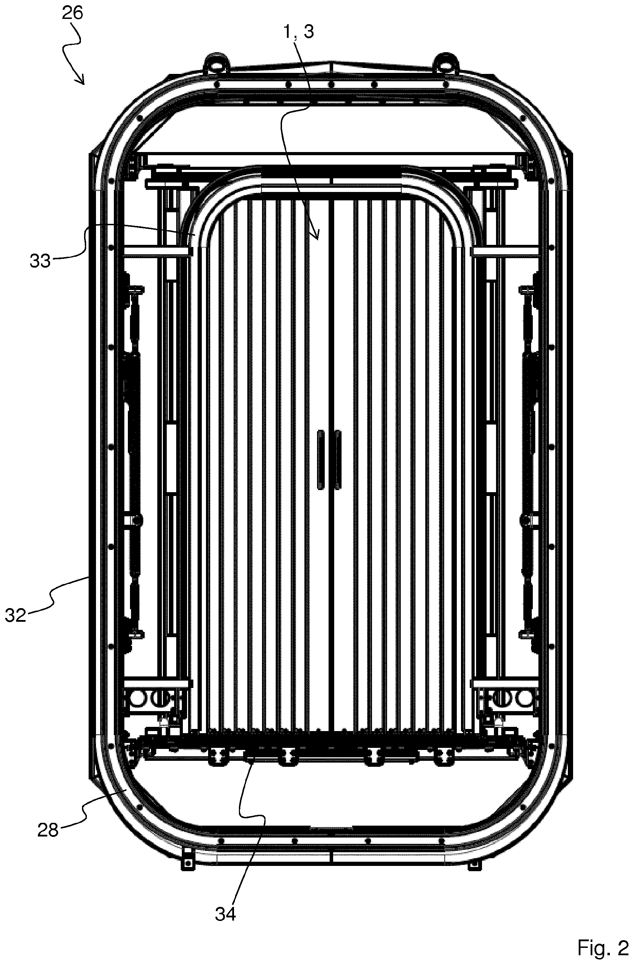

Aufgrund der sich ergebenden extrem platzsparenden Anordnung der Verschlusselemente 2a, 2b in deren zweiter Position 4 kann die erfindungsgemäße Vorrichtung 1 problemlos in einem erfindungsgemäßen Übergang 26 angeordnet werden, der zur Anordnung zwischen zwei gelenkig miteinander verbundenen Fahrzeugen, vorzugsweise Schienenfahrzeugen, vorgesehen ist. Fig. 2 zeigt einen erfindungsgemäßen Übergang 26 mit der erfindungsgemäßen Vorrichtung 1 aus Fig. 1, wobei die Verschlusselemente 2a, 2b in der ersten Position 3 gezeigt sind. Die Vorrichtung 1 ist dabei so dimensioniert, dass ein Querschnitt des Übergangs 26, der einem Querschnitt eines Fahrgastbereichs der Fahrzeuge entspricht, vollständig verschlossen ist, um einen Brand im Fahrgastbereich optimal eindämmen zu können.

In der axonometrischen Ansicht der Fig. 3 ist die Situation bei freigegebener Durchgangsöffnung 5 dargestellt. Besagter Querschnitt des Übergangs 26 ist somit freigegeben und Personen können durch den Querschnitt bzw. durch die Durchgangsöffnung 5 den Übergang 26 passieren. Dabei bewegen sich die Personen auf einem Boden 34 des Übergangs 26.

Dieser Querschnitt des Übergangs 26 ist in an sich bekannter Weise von einem inneren Balg 33 umgeben. Zum Schutz vor äußeren Einflüssen weist der Übergang 26 einen den inneren Balg 33 in an sich bekannter Weise umgebenden äußeren Balg 32 auf.

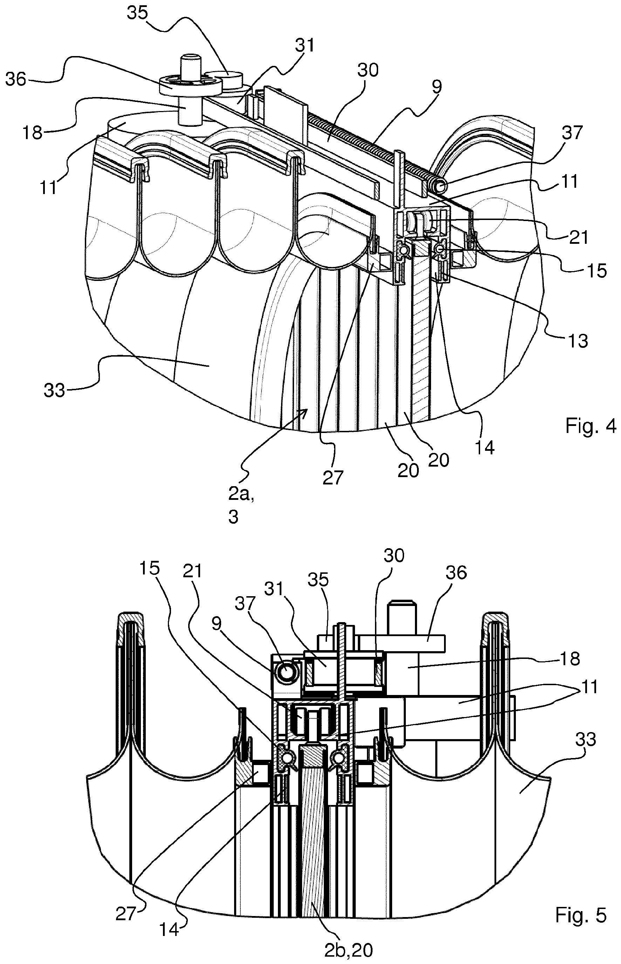

Zur Befestigung an den Fahrzeugen weist der Übergang 26 Endrahmen 28 auf, mit denen der Übergang 26 an einem Ende eines Fahrzeugkastens des jeweiligen Fahrzeugs befestigt werden kann. Grundsätzlich kann die Vorrichtung 1 einem solchen Endrahmen 28 befestigt werden. Weiters weist der Übergang 26 einen Mittelrahmen 27 auf, an welchem im gezeigten Ausführungsbeispiel die Vorrichtung 1 befestigt ist. Für diese Befestigung ist insbesondere eine obere Führung 11 der Vorrichtung 1 mit dem Mittelrahmen 27 verbunden, wie in Fig. 4 und Fig. 5 klar erkennbar ist.

Die obere Führung 11 ist im dargestellten Ausführungsbeispiel als Profil ausgeführt, in welchem die einzelnen Lamellen 20 der Verschlusselemente 2a, 2b mittels Tragrollen 21 hin und her bewegbar sind. Die Tragrollen 21 übertragen den überwiegenden Teil des Gewichts der Lamellen 20 auf die obere Führung 11, wobei die Tragrollen 21 eine im Wesentlichen reibungsfreie Bewegung in der oberen Führung 11 gewährleisten.

Die Verschlusselemente 2a, 2b bzw. die Lamellen 20 sind auf ihrer der oberen Führung 11 gegenüberliegenden Seite in einer unteren Führung 12 geführt. Da das Gewicht der Lamellen 20 überwiegend durch die Tragrollen 21 auf die obere Führung 11 übertragen wird, sind die untere Führung 12 und die darin angeordneten Abschnitte der Lamellen 20 als Gleitpaarung ausgelegt. Hierzu können diese Abschnitte der Lamellen 20 insbesondere mit einem Material beschichtet sein, das eine möglichst geringe Gleitreibung der Lamellen 20 in der unteren Führung 12 gewährleistet.

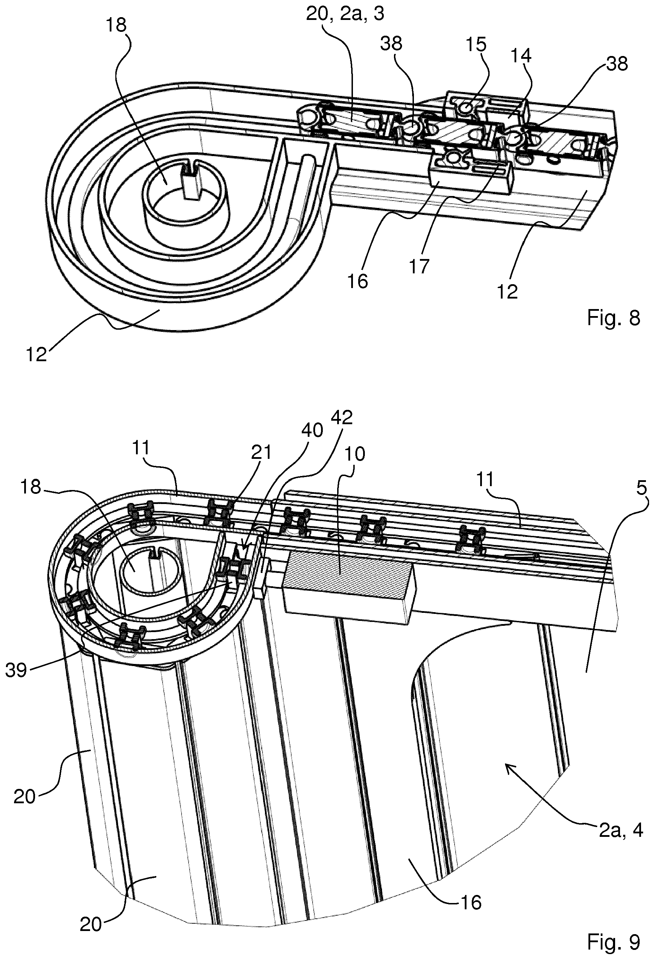

Eine Detailansicht der in der unteren Führung 12 geführten Lamellen 20 des Verschlusselements 2a ist in Fig. 8 dargestellt, wobei sich das Verschlusselement 2a in der ersten Position 3 befindet. In dieser Darstellung ist insbesondere auch die gelenkige Verbindung der Lamellen 20 über Scharniergelenke 38 zu erkennen. Hierbei sind die Lamellen 20 geometrisch derart gestaltet, dass sie jeweils auf einer Seite eine zangenförmige Gelenkspfanne des Scharniergelenks 38 ausbilden und auf einer gegenüberliegenden Seite einen walzenförmigen Gelenkskopf des Scharniergelenks 38. Die Lamellen 20 sind so miteinander verbunden, dass entlang der unteren Führung 12 gesehen der Gelenkskopf einer Lamelle 20 in der Gelenkspfanne der anschließenden Lamelle 20 aufgenommen ist.

Die obere Führung 11 und die untere Führung 12 verlaufen parallel zueinander und definieren durch ihren Verlauf bzw. ihre Geometrie den Verlauf 6 der Verschlusselemente 2a, 2b in der ersten Position 3 und zweiten Position 4. D.h. indem die Verschlusselemente 2a, 2b in den Führungen 11, 12 hin und her bewegt werden, werden die Verschlusselemente 2a, 2b von der ersten Position 3 in die zweite Position 4 und retour überführt.

Die Bewegung der Verschlusselemente 2a, 2b erfolgt im dargestellten Ausführungsbeispiel unter Verwendung der Synchronisationswellen 18. Letztere sind über Federstahlklammern 19 mit den Verschlusselementen 2a, 2b verbunden. Die Federstahlklammern 19 wiederum sind entlang der Drehachsen 8 gesehen gleichmäßig über die Synchronisationswellen 18 verteilt, sodass eine Drehmoment- bzw. Krafteinwirkung zwischen den Synchronisationswellen 18 und den Verschlusselementen 2a, 2b entlang der Drehachsen 8 gesehen gleichmäßig verteilt wird. D.h. zwischen der oberen Führung 11 und der unteren Führung 12 kommt es zu einer gleichmäßigen Krafteinwirkung auf die Verschlusselemente 2a, 2b, was ein Verkanten der Verschlusselemente 2a, 2b in den Führungen 11, 12 wirkungsvoll unterbindet. Dies gilt sowohl für den Fall, dass zunächst ein Drehmoment auf die Synchronisationswellen 18 wirkt, welches letztlich zu einer Bewegung der Verschlusselemente 2a, 2b führt, als auch für den Fall, dass eine Kraft direkt an den Verschlusselementen 2a, 2b angreift. Letzteres ist z.B. dann gegeben, wenn eine Person die Verschlusselemente 2a, 2b durch Ziehen an Haltegriffen 29, die an Lamellen 20 der Verschlusselemente 2a, 2b befestigt sind, von der ersten Position 3 in die zweite Position 4 überführt.

Dabei muss die Person vorzugsweise eine Kraft überwinden, die von Schließmitteln permanent auf die Verschlusselemente 2a, 2b ausgeübt wird, um diese in die erste Position 3 zu überführen und/oder in der ersten Position 3 zu halten. Im dargestellten Ausführungsbeispiel umfassen die Schließmittel für jedes Verschlusselement 2a, 2b jeweils eine Feder 9, die in Fig. 4 und Fig. 5 besonders gut erkennbar ist.

Die Feder 9 ist über der oberen Führung 11 angeordnet und mittels eines geradlinig verlaufenden Führungsstabs 37 geführt. Dabei ist die Feder 9 als Schraubendruckfeder ausgeführt, deren Windungen rund um den Führungsstab 37 verlaufen. Die Feder 9 stützt sich mit einem Ende an einem Stützelement ab, das starr mit der oberen Führung 11 verbunden und von dieser nach oben abstehend angeordnet ist. Dabei kann das Stützelement einstückig mit der oberen Führung 11 ausgeführt sein. Mit einem anderen Ende ist die Feder 9 mit einem Zahnriemen 30 verbunden. Hierzu weist der Zahnriemen 30 vorzugsweise ein abstehendes Druckelement auf, gegen das das andere Ende der Feder 9 drückt, sodass zumindest eine kraftschlüssige Verbindung zwischen der Feder 9 und dem Druckelement bzw. dem Zahnriemen 30 gegeben ist.

Der Zahnriemen 30 ist ebenfalls oberhalb der oberen Führung 11 angeordnet und verläuft im Wesentlichen parallel zur Feder 9 und zur oberen Führung 11. Der Zahnriemen 30 verläuft dabei zwischen zwei Zahnrädern 31, die an der oberen Führung 11 drehbar gelagert sind, wobei Drehachsen der Zahnräder 31 im Wesentlichen parallel zur Drehachse 8 der Synchronisationswellen 18 angeordnet sind. Eines der beiden Zahnräder 31 jedes Verschlusselements 2a, 2b ist im Bereich der jeweiligen Synchronisationswelle 18 angeordnet und weist ein Ritzel 35 auf, das mit einem Zahnrad 36 der Synchronisationswelle 18 in Eingriff steht. Wird also der Zahnriemen 30, insbesondere durch die Feder 9, bewegt, so drehen sich nicht nur die Zahnräder 31, sondern aufgrund des Ritzels 35 und des Zahnrads 36 auch die Synchronisationswelle 18. Auf diese Weise ist die Feder 9 mit der zugehörigen Synchronisationswelle 18 wirkverbunden. Umgekehrt bewirkt natürlich eine Bewegung des Verschlusselements 2a, 2b ein Spannen bzw. Entspannen der Feder 9. Insbesondere wird die Feder 9 gespannt, wenn das jeweilige Verschlusselement 2a, 2b von der ersten Position 3 in die zweite Position 4 überführt wird.

Um Personen das problemlose Passieren der Durchgangsöffnung 5 bzw. des Übergangs 26 im Normalfall, wo keine Gefahr, insbesondere kein Brand, gegeben ist, zu ermöglichen, ist im dargestellten Ausführungsbeispiel für jedes Verschlusselement 2a, 2b ein Haltemittel in Form eines Elektromagnets 10 vorgesehen, der mit einem Freigabeelement in Form eines Freigabehebels 42 zusammenarbeitet. Der Elektromagnet 10 und der Freigabehebel 42 dienen dazu, das jeweilige Verschlusselement 2a, 2b solange in der zweiten Position 4 zu halten, bis die Überführung in die erste Position 3 initiiert wird. Die Initiierung kann dabei durch eine Brandmeldung erfolgen, wobei die Brandmeldung wiederum in Form eines Signals oder eines Wegfalls eines Sicherheitssignals stattfinden kann. Darüberhinaus kann die Initiierung natürlich auch aus anderen Gründen durchgeführt werden, insbesondere wenn die Durchgangsöffnung 5 bewusst verschlossen werden soll. Schließlich ist durch die Elektromagneten 10 sichergestellt, dass im Falle eines Strom- bzw. Energieausfalls automatisch eine Überführung der Verschlusselemente 2a, 2b in die erste Position 3 erfolgt, da die Elektromagneten 10 ohne Stromversorgung keine Magnet- bzw. Haltekraft aufbringen und die Freigabehebel 42 - und damit die Verschlusselemente 2a, 2b - somit nicht länger in der zweiten Position 4 halten können.

Wie aus der Ansicht der Fig. 6 hervorgeht, ist der jeweilige Elektromagnet 10 mit dem Freigabehebel 42 an der oberen Führung 11 im Bereich eines Endes 40 der oberen Führung 11 angeordnet. Wird der Elektromagnet 10 bestromt so drückt der Freigabehebel 42 mit einer definierten Kraft gegen die obere Führung 11. Wird der Elektromagnet 10 hingegen nicht mit Energie versorgt, so drückt eine Freigabehebelfeder (nicht dargestellt) mit einer Federkraft den Freigabehebel 42 in die Gegenrichtung, also von der oberen Führung 11 weg und zum Elektromagnet 10.

Wie in Fig. 6 oder Fig. 7a ersichtlich, umfasst der Freigabehebel 42 an einer Vorderkante eine Auflaufschräge, welche in bestromtem Zustand durch einen Schlitz (nicht dargestellt) in der oberen Führung 11 ragt. Wird das jeweilige Verschlusselement 2a, 2b (vorzugsweise per Hand) geöffnet, gleitet die letzte Tragrolle 21 bzw. ein zugehöriges Tragrollenlager 39 oder eine Freigabenocke (nicht dargestellt) über die Auflaufschräge des Freigabehebels 42 und drückt diesen zurück. Danach rastet der Freigabehebel 42 hinter der Tragrolle 21 bzw. dem Tragrollenlager 39 oder der Freigabenocke (nicht dargestellt) ein und blockiert somit das jeweilige Verschlusselement 2a, 2b in der zweiten Position 4.

Bei Energieausfall oder Wegfall des Sicherheitssignales wird der Elektromagnet 10 nicht mehr mit Energie versorgt und die Federkraft der Freigabehebelfeder (nicht dargestellt) drückt den Freigabehebel 42 in Richtung Elektromagnet 10, wodurch die letzte Tragrolle 21 oder die Freigabenocke (nicht dargestellt) wieder frei gegeben wird und das jeweilige Verschlusselement 2a, 2b durch die jeweilige Feder 9 wieder geschlossen bzw. in die erste Position 3 überführt wird. Ist Energie bzw. das Sicherheitssignal wieder vorhanden, so wird der Elektromagnet 10 wieder bestromt. Beim ersten (vorzugsweise händischen) Öffnen rastet die letzte Tragrolle 21 bzw. das Tragrollenlager 39 oder die Freigabenocke (nicht dargestellt) wieder ein, wie oben beschrieben.

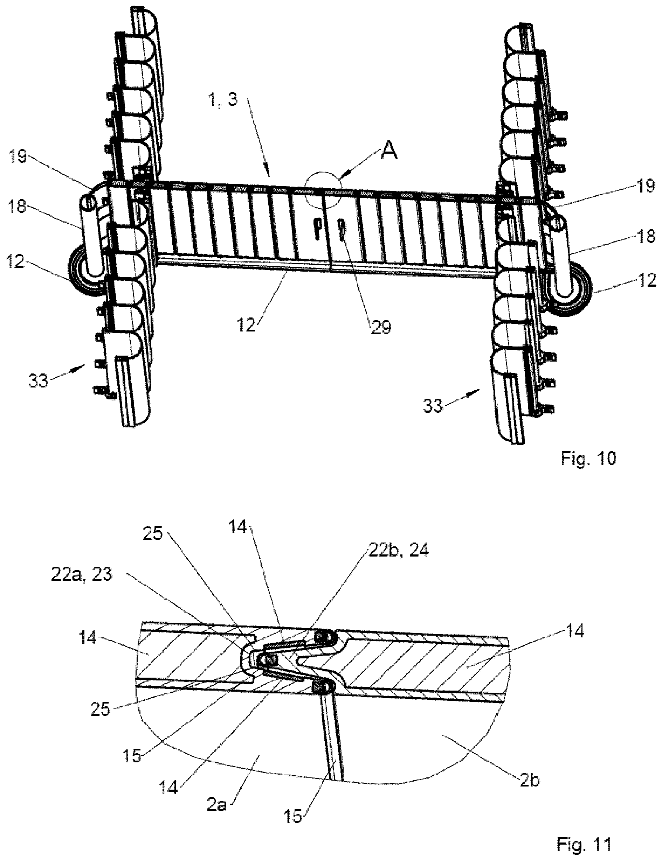

Die Lamellen 20 können zur Sicherung ihrer mechanischen Stabilität und gleichzeitiger Senkung ihrer Masse aus einer festen Hülle, z.B. aus einem geeigneten harten Kunststoff oder einer Aluminiumlegierung, bestehen, die mit einem leichteren Material, z.B. einem Schaum, beispielsweise einem PolyurethanSchaum, gefüllt ist. Um die Brandschutzfunktion der Lamellen 20 weiter zu steigern, sind die Lamellen 20 in der dargestellten Ausführungsform mit einem intumeszierenden Material, insbesondere mit einem intumeszierenden Brandschutzlaminat 14, gefüllt, vgl. Fig. 11, die eine vergrößerte Ansicht des Details A aus Fig. 10 zeigt. Bei Hitzeeinwirkung bildet das intumeszierende Material bzw. Brandschutzlaminat 14 eine hitzeisolierende Schicht, die zudem als Rauchgassperre fungieren kann. D.h. die Verschlusselemente 2a, 2b bilden dann in der ersten Position 3 eine effektive Hitzeisolierung der Durchgangsöffnung 5, was die Gefahr eines Brandüberschlags durch Hitzeeinwirkung durch die geschlossene Durchgangsöffnung 5 bzw. den Übergang 26 hindurch weiter verringert.

Wie aus Fig. 11 hervorgeht, stehen freie Enden 22a, 22b der Verschlusselemente 2a, 2b in der ersten Position 3 in Eingriff miteinander. Dabei weist das Verschlusselement 2a an seinem freien Ende 22a eine Nut 23 auf. Das Verschlusselement 2b weist an seinem freien Ende 22b wiederum ein Gegenstück 24 zur Nut 23 auf, wobei in der ersten Position 3 das Gegenstück 24 in der Nut 23 angeordnet ist. Weiters ist in Fig. 11 erkennbar, dass auf Innenflächen 25 der Nut 23 intumeszierende Brandschutzlaminate 14 angeordnet sind, wobei das Gegenstück 24 in der ersten Position 3 zwischen diesen intumeszierenden Brandschutzlaminaten 14 angeordnet ist.

Die freien Enden 22a, 22b werden durch die von den intumeszierenden Brandschutzlaminaten 14 bei Hitzeeinwirkung gebildeten Isolationsschichten besonders effektiv gegen zerstörerische Hitzeeinwirkung geschützt. Auf diese Weise können im Brandfall insbesondere auch Dichtungen 15 geschützt werden, die zur Abdichtung gegen Rauchgase sowie als Fingerschutz dienen und an den freien Enden 22a, 22b angeordnet sind. Insbesondere ist im dargestellten Ausführungsbeispiel eine Dichtung 15 an der Spitze des Gegenstücks 24 vorgesehen, sodass diese Dichtung 15 innerhalb der Nut 23 angeordnet ist, wenn sich die Verschlusselemente 2a, 2b in der ersten Position 3 befinden. Der Fingerschutz, der durch eine relativ weiche und elastische Ausbildung der Dichtungen 15 gegeben ist, beugt Verletzungen vor, falls Personen zwischen den freien Enden 22a, 22b eingeklemmt werden.

Weiterhin sind auch an die Nut 23 einfassenden Spitzen des freien Endes 22a Dichtungen 15 angeordnet. Je nachdem von welcher Seite der Durchgangsöffnung 5 eine Hitzeeinwirkung erfolgt, wird zumindest eine dieser Dichtungen 15 des freien Endes 22a durch die von den intumeszierenden Brandschutzlaminaten 14 gebildeten Isolationsschichten geschützt und kann so zur Abdichtung gegen Rauchgase effektiv beitragen. Auch diese Dichtungen 15 können eine Fingerschutz-Funktion erfüllen.

Weiters sind im dargestellten Ausführungsbeispiel, vgl. insbesondere Fig. 4 und Fig. 5, auf Innenflächen 13 der oberen Führung 11 intumeszierende Brandschutzlaminate 14 angeordnet. Dabei sind die Lamellen 20 abschnittsweise zwischen den Innenflächen 13 bzw. zwischen den intumeszierenden Brandschutzlaminaten 14 auf den Innenflächen 13 angeordnet. In einer von der Durchgangsöffnung 5 weg weisenden Richtung gesehen, d.h. in Fig. 4 und Fig. 5 in einer nach oben weisenden Richtung gesehen, sind hinter den intumeszierenden Brandschutzlaminaten 14 Dichtungen 15 im Bereich der Innenflächen 13 angeordnet. Diese Dichtungen 15 dichten einen Bereich zwischen dem jeweiligen Verschlusselement 2a, 2b in der ersten Position 3 und der jeweiligen oberen Führung 11 ab. D.h. auf diese Weise wird die Durchgangsöffnung 5 im Bereich der oberen Führung 11 gegen Rauchgas abgedichtet, wobei die intumeszierenden Brandschutzlaminate 14 auf den Innenflächen 13 die Dichtungen 15 im Bereich der Innenflächen 13 gegen Hitzeeinwirkungen schützen. Bzw. sind die Dichtungen 15 zur Abdichtung gegen Rauchgase notwendig, solange die intumeszierenden Brandschutzlaminate 14 noch nicht expandiert sind und somit noch keine Rauchgassperre ausgebildet haben.

Um die Abdichtung der Durchgangsöffnung 5, insbesondere gegen Rauchgas, weiter zu verbessern, sind beim gezeigten Ausführungsbeispiel im Bereich eines Rands der Durchgangsöffnung 5 Hilfsrahmenelemente 16 vorgesehen, deren Längsachse 41 normal auf die Schnittebene 7 steht, d.h. deren Längsachse 41 im Wesentlichen vertikal verläuft. Die Hilfsrahmenelemente 16 erstrecken sich dabei von der oberen Führung 11 bis zur unteren Führung 12 und sind mit diesen verbunden, vgl. Fig. 1. Die Hilfsrahmenelemente 16 sind auf beiden Seiten der Durchgangsöffnung 5 angeordnet. Entsprechend nehmen jeweils zwei Hilfsrahmenelemente 16 sowohl das Verschlusselement 2a als auch das Verschlusselement 2b zwischen sich auf. Dabei sind Innenflächen 17 der Hilfsrahmenelemente 16 den Verschlusselementen 2a, 2b bzw. den Lamellen 20 zugewandt, vgl. Fig. 8. Auf den Innenflächen 17 sind intumeszierende Brandschutzlaminate 14 angeordnet, die im Falle von Hitzeeinwirkung sich ausdehnen und eine hitzeisolierende Schicht bilden.

In einer von der Durchgangsöffnung 5 weg weisenden, horizontalen Richtung gesehen sind hinter den intumeszierenden Brandschutzlaminaten 14 im Bereich der Innenflächen 17 Dichtungen 15 angeordnet. Diese Dichtungen 15 werden somit im Brandfall durch die intumeszierenden Brandschutzlaminate 14 auf den Innenflächen 17 geschützt und dichten einen Bereich zwischen den Lamellen 20 der Verschlusselemente 2a, 2b und den jeweiligen Hilfsrahmenelementen 16 zuverlässig, insbesondere gegen Rauchgas, ab, vorzugsweise wenn sich die Verschlusselemente 2a, 2b in der ersten Position 3 befinden. Bzw. sind die Dichtungen 15 zur Abdichtung gegen Rauchgase notwendig, solange die intumeszierenden Brandschutzlaminate 14 noch nicht expandiert sind und somit noch keine Rauchgassperre ausgebildet haben.

### BEZUGSZEICHENLISTE

- 1: Vorrichtung zur Eindämmung eines Brands
- 2a, 2b: Verschlusselement
- 3: Erste Position des Verschlusselements
- 4: Zweite Position des Verschlusselements
- 5: Durchgangsöffnung
- 6: Verlauf des Verschlusselements
- 7: Schnittebene
- 8: Drehachse
- 9: Feder
- 10: Elektromagnet
- 11: Obere Führung
- 12: Untere Führung
- 13: Innenfläche einer Führung
- 14: Intumeszierendes Brandschutzlaminat
- 15: Dichtung
- 16: Hilfsrahmenelement
- 17: Innenfläche des Hilfsrahmenelements
- 18: Synchronisationswelle
- 19: Federstahlklammer
- 20: Lamelle
- 21: Tragrolle
- 22a, 22b: Freies Ende des Verschlusselements
- 23: Nut
- 24: Gegenstück zur Nut
- 25: Innenfläche der Nut
- 26: Übergang
- 27: Mittelrahmen des Übergangs
- 28: Endrahmen des Übergangs
- 29: Handgriff
- 30: Zahnriemen
- 31: Zahnrad
- 32: Äußerer Balg
- 33: Innerer Balg
- 34: Boden des Übergangs
- 35: Ritzel
- 36: Zahnrad der Synchronisationswelle
- 37: Führungsstab
- 38: Scharniergelenk
- 39: Tragrollenlager
- 40: Ende der oberen Führung
- 41: Längsachse des Hilfsrahmenelements
- 42: Freigabehebel

## Patentansprüche

1. Übergang (26) zur Anordnung zwischen zwei gelenkig miteinander verbundenen Fahrzeugen, vorzugsweise Schienenfahrzeugen, wobei der Übergang (26) eine Vorrichtung (1) zur Eindämmung eines Brands in einem Fahrgastbereich des Fahrzeugs umfasst, **dadurch gekennzeichnet, dass** die Vorrichtung (1) mindestens ein Verschlusselement (2a, 2b) umfasst, welches von einer ersten Position (3) in eine zweite Position (4) und umgekehrt überführbar ist, wobei das mindestens eine Verschlusselement (2a, 2b) in der ersten Position (3) eine Durchgangsöffnung (5) der Vorrichtung (1) vollständig ausfüllt und in der zweiten Position (4) die Durchgangsöffnung (5) zumindest abschnittsweise freigibt, um Personen einen Durchgang zu ermöglichen, dass das mindestens eine Verschlusselement (2a, 2b) flexibel ist und dass in der ersten Position (3) ein Verlauf (6) des mindestens einen Verschlusselements (2a, 2b) in einer horizontalen Schnittebene (7) eine andere Krümmung aufweist als in der zweiten Position (4).

2. Übergang (26) nach Anspruch 1, **dadurch gekennzeichnet, dass** die Vorrichtung (1) Schließmittel (9) umfasst, die permanent eine Kraft auf das mindestens eine Verschlusselement (2a, 2b) ausüben, um dieses in die erste Position (3) überzuführen und/oder in der ersten Position (3) zu halten.

3. Übergang (26) nach einem der Ansprüche 1 bis 2, **dadurch gekennzeichnet, dass** Haltemittel (10, 42) vorgesehen sind, um das mindestens eine Verschlusselement (2a, 2b) solange in der zweiten Position (4) zu halten, bis die Überführung in die erste Position (3) initiiert wird.

4. Übergang (26) nach einem der Ansprüche 1 bis 3, **dadurch gekennzeichnet, dass** das mindestens eine Verschlusselement (2a, 2b) auf einander gegenüberliegenden Seiten mittels Führungen (11, 12) geführt ist, wobei die Führungen (11, 12) den Verlauf (6) des mindestens einen Verschlusselements (2a, 2b) in der Schnittebene (7) vorgeben.

5. Übergang (26) nach Anspruch 4, **dadurch gekennzeichnet, dass** in mindestens einer der Führungen (11, 12) auf einer dem mindestens einen Verschlusselement (2a, 2b) zugewandten Innenfläche (13) ein intumeszierendes Material, vorzugsweise ein intumeszierendes Brandschutzlaminat (14), angeordnet ist.

6. Übergang (26) nach Anspruch 5, **dadurch gekennzeichnet, dass** in einer von der Durchgangsöffnung (5) weg weisenden Richtung gesehen hinter dem intumeszierenden Material (14) eine Dichtung (15) im Bereich der Innenfläche (13) angeordnet ist.

7. Übergang (26) nach einem der Ansprüche 1 bis 6, **dadurch gekennzeichnet, dass** in einem Bereich eines Rands der Durchgangsöffnung (5) Hilfsrahmenelemente (16) vorgesehen sind, deren Längsachse (41) normal auf die Schnittebene (7) steht und die das mindestens eine Verschlusselement (2a, 2b) von zwei gegenüberliegenden Seiten zwischen sich aufnehmen, wobei auf einer Innenfläche (17) der Hilfsrahmenelemente (16) ein intumeszierendes Material, vorzugsweise ein intumeszierendes Brandschutzlaminat (14), angeordnet ist.

8. Übergang (26) nach Anspruch 7, **dadurch gekennzeichnet, dass** in einer von der Durchgangsöffnung (5) weg weisenden Richtung gesehen hinter dem intumeszierenden Material (14) eine Dichtung (15) im Bereich der Innenfläche (17) der Hilfsrahmenelemente (16) angeordnet ist.

9. Übergang (26) nach einem der Ansprüche 1 bis 8, **dadurch gekennzeichnet, dass** mindestens eine um eine normal auf die Schnittebene (7) stehende Drehachse (8) drehbare Synchronisationswelle (18) vorgesehen ist, die außerhalb der Durchgangsöffnung (5) angeordnet und mit einem Ende des mindestens einen Verschlusselements (2a, 2b) verbunden ist, wobei durch Drehung der mindestens einen Synchronisationswelle (18) das mindestens eine Verschlusselement (2a, 2b) zwischen der ersten Position (3) und der zweiten Position (4) hin und her überführbar ist.

10. Übergang (26) nach einem der Ansprüche 1 bis 9, **dadurch gekennzeichnet, dass** das mindestens eine Verschlusselement (2a, 2b) aus gelenkig miteinander verbundenen Lamellen (20) aufgebaut ist.

11. Übergang (26) nach Anspruch 10, **dadurch gekennzeichnet, dass** die Lamellen (20) mit einem intumeszierenden Material gefüllt sind.

12. Übergang (26) nach einem der Ansprüche 1 bis 11, **dadurch gekennzeichnet, dass** genau zwei Verschlusselemente (2a, 2b) vorgesehen sind.

13. Übergang (26) nach Anspruch 12, **dadurch gekennzeichnet, dass** die beiden Verschlusselemente (2a, 2b) freie Enden (22a, 22b) aufweisen, die in der ersten Position (3) miteinander in Eingriff stehen.

14. Übergang (26) nach Anspruch 13, **dadurch gekennzeichnet, dass** eines der beiden freien Enden (22a, 22b) zumindest abschnittsweise eine Nut (23) aufweist und das andere der beiden freien Enden (22a, 22b) zumindest abschnittsweise als Gegenstück (24) zur Nut (23) ausgebildet ist, wobei in der ersten Position (3) die Nut (23) und das Gegenstück (24) in Eingriff stehen.

15. Übergang (26) nach Anspruch 14, **dadurch gekennzeichnet, dass** auf einander gegenüberliegenden Innenflächen (25) der Nut (23) intumeszierendes Material, vorzugsweise intumeszierendes Brandschutzlaminat (14), angeordnet ist.
